# EUROPÄISCHE PATENTANMELDUNG

(11) **EP 1 126 296 A1**
(43) Veröffentlichungstag der Anmeldung: **22.08.2001**
(21) Anmeldenummer: 01440016.2
(22) Anmeldetag: 25.01.2001
(51) Int. Cl.: G02B 6/44

(54) **Metallisches optisches Luftkabel**

(30) Priorität: 15.02.2000 DE 10006806
(71) Anmelder: ALCATEL, 75008 Paris (FR)
(72) Erfinder: Gregor, Carsten, 46145 Oberhausen (DE)
(74) Vertreter: Rausch, Gabriele, Dr.

(57) **Zusammenfassung**

Metallisches optisches Luftkabel mit einem einen oder mehrere Lichtwellenleiter enthaltenden längsnahtgeschweißten Metallrohr (2) sowie einem mit dem Metallrohr (2) kraft- oder formschlüssig verbundenen Metalldraht (1).

## Beschreibung

Die Erfindung betrifft ein metallisches optisches Luftkabel.

Wegen der Überlegenheit optischer Kabel gegenüber herkömmlichen Kupferkabeln hinsichtlich der Übertragungsrate und der Übertragungsqualität ist man seit längerem bestrebt, die Lichtwellenleiterinfrastruktur für Zugangs-, Verteil- (Ort-, Regional-) und Weitverkehrsverbindungen weiter auszubauen.

Zum Ausbau des Lichtwellenleiterkabelnetzes werden die Kabel in herkömmlicher Technik durch Aufgraben von Straßen, Gehwegen etc. verlegt bzw. in sogenannten Kabelzugrohren verlegt. Diese Arten der Verlegung sind sehr zeit- und kostenaufwendig. Darüber hinaus sind die vorgesehenen Kabeltrassen oft schon voll belegt. Weitere Kabel zu verlegen ist häufig nicht mehr möglich, da der Zugriff auf die bereits vorhandenen Kabel erschwert oder sogar verhindert würde. Man ist daher ständig auf der Suche nach anderen Verlegearten. So ist es bekannt, optische Kabel in vorhandene Ver- bzw. Entsorgungsleitungen zu verlegen, um auch eventuell auftretende Wegerechtsprobleme umgehen zu können.

Es ist auch bekannt, sogenannte Luftkabel zu verlegen, um die Kosten bei der Verlegung zu verringern. Insbesondere bei der Stromversorgung im Weitverkehrsbereich kommen Luftkabel zum Einsatz.

In jüngerer Zeit nutzt man auch die Erdseile bzw. auch die Phasenleiter von Freileitungsanlagen für die Übertragung von Nachrichten.

So ist es z. B. bekannt, einen der Drähte von Erdseilen oder Phasenleiter durch ein metallisches Röhrchen zu ersetzen, in welchem sich mehrere Lichtwellenleiter befinden. Weiter sind Luftkabel für den Weitverkehrsbereich bekannt, die aus einer metallischen Seele bestehen, in deren Oberfläche Nuten verlaufen, in welche Lichtwellenleiter bzw. Lichtwellenleiterelemente eingelegt sind. Die Nuten sind durch eine Bebänderung verschlossen. Als Zugelemente sind mehrere Metalldrähte auf die mit der Bebänderung versehene Seele aufgeseilt. In Zugangs- (Orts- und Regional netze) und Verteilnetzen zur Versorgung der Teilnehmer werden Luftkabel jedoch wegen verschiedener Nachteile kaum mehr angewendet.

Der vorliegenden Erfindung liegt die Aufgabe zugrunde, ein Luftkabel bereitzustellen, welches so kostengünstig herstellbar und verlegbar ist, daß es in der Verteilebene bzw. im Zugangsbereich eines optischen Übertragungsnetzes einsetzbar ist und gleichzeitig eine hohe Gebrauchsdauer und Zuverlässigkeit aufweist.

Diese Aufgabe wird durch das im Anspruch 1 offenbarte gelöst.

Weitere vorteilhafte Ausgestaltungen der Erfindung sind in den Unteransprüchen erfaßt.

Neben den sich aus der Aufgabenstellung direkt ergebenden Vorteil weist das erfindungsgemäße Kabel noch den Vorteil auf, daß es aufgrund seiner geringen Abmessungen unauffällig verlegt werden kann. Es ist in großen Längen herstellbar und kann entweder zu Ringen gewickelt oder auf einer herkömmlichen Kabeltrommel bis zum Endverbraucher transportiert und dort von dem Ring oder der Trommel in der benötigten Länge abgenommen werden.

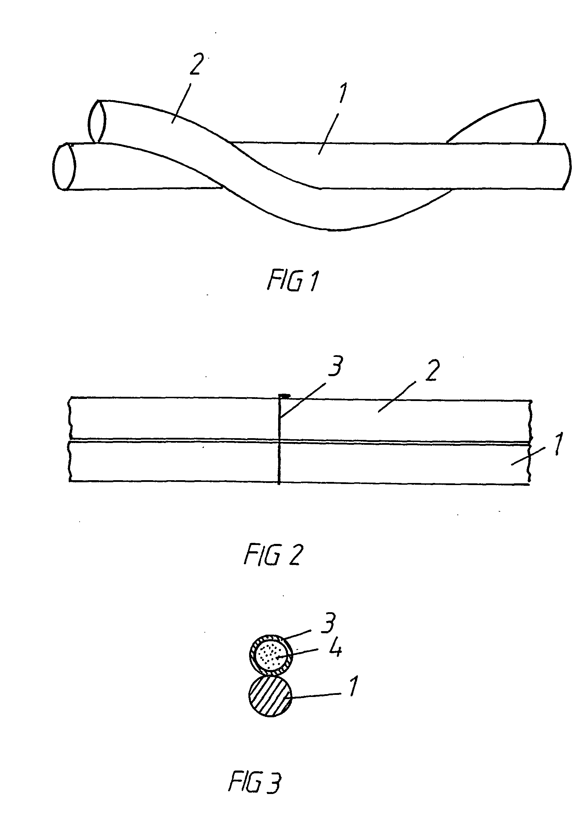

Die Erfindung ist anhand der in den Figuren 1 bis 3 schematisch dargestellten Ausführungsbeispiel näher erläutert.

In der Figur 1 ist mit 1 ein Metalldraht bezeichnet, der in seiner längsaxialen Richtung im wesentlichen gestreckt verläuft und um den ein Metallröhrchen 2 herumgeseilt ist. Das Metallröhrchen ist durch Formen eines Metallbandes zum Schlitzrohr und Verschweißen der Schlitzrohrkanten hergestellt. Ein Herstellungsverfahren für ein solches Metallröhrchen ist in der DE-A-44 34 133 beschrieben.

Bevor das Schlitzrohr geschlossen wird, werden ein oder mehrere Lichtwellenleiter ggf. zusammen mit einer zähflüssigen Masse in das Schlitzrohr eingeführt. Metallröhrchen dieser Art können mit dem genannten verfahren Längen von mehr als 6 km in einer Länge hergestellt werden.

Das Metallröhrchen 2 enthält eine Vielzahl von Lichtwellenleitern.

In der Figur 2 ist eine andere Ausführungsform eines Luftkabels nach der Lehre der Erfindung in einer seitlichen Ansicht dargestellt.

Der Metalldraht 1 und das Metallröhrchen 2 mit den Lichtwellenleitern in seinem Innern verlaufen parallel zueinander und sind in bestimmten Abständen von ca. 1000 mm miteinander verbunden, z. B. durch Punktschweißen oder durch einen Bindedraht 3, wobei der Verbindung durch den Draht 3 der Vorzug eingeräumt wird.

Fig. 3 zeigt einen Schnitt durch ein Luftkabel nach den Figuren 1 oder 2. Die in dem Metallröhrchen 2 befindlichen Lichtwellenleiter sind mit 4 bezeichnet.

In den dargestellten Luftkabeln beträgt der Durchmesser des Drahtes 1 ca. 3,5 mm und der Außendurchmesser des Metallröhrchens 2 ebenfalls 3,5 mm. Die Wanddicke des Metallröhrchens 2 beträgt in etwa 0,25 mm. In einem solchen Metallröhrchen 2 können bis zu sechsunddreißig Lichtwellenleiter 4 Platz finden.

Der Metalldraht 1 ist mit besonderem Vorteil ein Stahldraht, der mit einer Verzinkungsschicht versehen ist, um den Stahldraht gegen Korrosion zu schützen. Die Verzinkungsschicht weist vorteilhafterweise einige Gewichtsprozente Aluminium auf, wodurch die Korrosionsbeständigkeit des Metalldrahtes 1 noch weiter erhöht wird. Solche beschichteten Stahldrähte sind unter dem Handelsnamen Carpal-Drähte auf dem Markt erhältlich. Der Metalldraht 1 kann in einer Abwandlung des Erfindungsgedankens auch aus einem Stahldraht mit einer Beschichtung aus nicht rostendem Stahl oder Aluminium bestehen, oder gänzlich aus Edelstahl gefertigt sein.

Das Metallröhrchen 2 besteht bevorzugt aus nichtrostendem Stahl, obwohl auch ein normaler Stahl mit hoher Zugfestigkeit verwendet werden kann, wobei dann das Metallröhrchen 2 mit einer korrosionsverhindernden Schicht versehen sein muß, die z. B. aus nichtrostendem Stahl oder einer Verzinkungsschicht bestehen kann. Bei der Verlegung wird das aus dem Metalldraht 1 und dem mit dem Metalldraht 1 verbundenen Metallröhrchen 2 bestehende Luftkabel von dem Vorratsring bzw. der Kabeltrommel abgewickelt und auf die benötigte Länge abgeschnitten.

An den Endpunkten, z. B. an Gebäudewänden, an Masten, Bäumen wird der Metalldraht 1 z. B. mit einer sogenannten Abfangspirale befestigt.

Das Metallröhrchen 2 und damit die in ihm verlaufenden Lichtwellenleiter 4 sind damit frei von mechanischen Spannungen.

## Patentansprüche

1. Metallisches optisches Luftkabel mit einem einen oder mehrere Lichtwellenleiter enthaltenden längsnahtgeschweißten Metallrohr sowie einem mit dem Metallrohr kraft- oder formschlüssig verbundenen Metalldraht.

2. Luftkabel nach Anspruch 1, **dadurch gekennzeichnet,** daß das Metallrohr und der Metalldraht miteinander verseilt sind.

3. Luftkabel nach Anspruch 1, **dadurch gekennzeichnet,** daß das Metallrohr um den gestreckt verlaufenden Metalldraht herumgeseilt ist.

4. Luftkabel nach Anspruch 1, **dadurch gekennzeichnet,** daß das Metallrohr und der Metalldraht parallel verlaufend zueinander angeordnet sind und in längsaxialen Abständen form- oder kraftschlüssig miteinander verbunden sind.

5. Luftkabel nach Anspruch 4, **dadurch gekennzeichnet,** daß das Metallrohr und der Metalldraht durch dünne Metallbindedrähte verbunden sind.

6. Luftkabel nach Anspruch 1 oder einem der folgenden, **dadurch gekennzeichnet,** daß der Metalldraht um seine Längsachse verdrallt ist.

7. Luftkabel nach Anspruch 1 oder einem der folgenden, **dadurch gekennzeichnet,** daß das Metallrohr und der Metalldraht zumindest abschnittsweise miteinander verschweißt sind.

8. Luftkabel nach Anspruch 1, **dadurch gekennzeichnet,** daß das Metallrohr aus Stahl vorzugsweise rostfreien Stahl besteht.

9. Luftkabel nach Anspruch 1 oder einem der folgenden, **dadurch gekennzeichnet,**
daß das Metallrohr eine Bebänderung aus Metall oder einem Polymermaterial aufweist.

10. Luftkabel nach Anspruch 1 oder einem der folgenden, **dadurch gekennzeichnet,** daß der Metalldraht ein verzinkter Stahldraht ist.

11. Luftkabel nach Anspruch 10, **dadurch gekennzeichnet,** daß die Verzinkungsschicht des Stahldrahtes Aluminium enthält.

12. Luftkabel nach Anspruch 1 oder einem der folgenden, **dadurch gekennzeichnet,** daß der Metalldraht eine Beschichtung aus rostfreiem Stahl aufweist.

13. Luftkabel nach Anspruch 1 oder einem der folgenden, **dadurch gekennzeichnet,** daß der Metalldraht (1) aus rostfreiem Stahl besteht.

14. Luftkabel nach Anspruch 1, **dadurch gekennzeichnet,** daß das Metallrohr (2) eine Wellung aufweist.
